# EUROPÄISCHE PATENTSCHRIFT

(11) **EP 0 647 306 B1**
(45) Veröffentlichungstag und Bekanntmachung des Hinweises auf die Patenterteilung: **11.09.1996**
(21) Anmeldenummer: 93914707.0
(22) Anmeldetag: 23.06.1993
(51) Int. Cl.: F24J 2/46, F24J 2/52

(54) **SONNENKOLLEKTORANLAGE**
SOLAR ENERGY COLLECTOR
COLLECTEUR SOLAIRE

(30) Priorität: 01.07.1992 DE 4221633
(43) Veröffentlichungstag der Anmeldung: 12.04.1995
(73) Patentinhaber: KIRCHMAYER, Leonhard, D-80333 München (DE)
(72) Erfinder: KIRCHMAYER, Leonhard, D-80333 München (DE)
(74) Vertreter: Patentanwälte Leinweber & Zimmermann
(86) Internationale Anmeldenummer: EP9301607
(87) Internationale Veröffentlichungsnummer: WO9401726

(56) Entgegenhaltungen:
- DE-A- 2 614 145
- DE-A- 2 905 494
- DE-A- 3 934 485
- FR-A- 2 381 982

## Beschreibung

Die Erfindung bezieht sich auf eine Sonnenkollektoranlage aus einer Mehrzahl von auf einer vorzugsweise geneigten Tragfläche, z. B. einem Dach, festlegbaren Kollektorelementen, die jeweils einen Grundkörper mit einem oder mehreren in einer der Sonne zugewandten Ebene liegenden, an ein Wärmeträgerfluidnetz anschließbaren Kollektorkanälen sowie ggf. einem oder mehreren in einer quer zum Kollektorkanal ausgerichteten Ebene liegenden Absorberkanälen umfassen, wobei die Grundkörper der Kollektorelemente mindestens im Bereich von zwei sich parallel zueinander erstreckenden Seiten ihrer vier Seiten zur gegenseitigen festen Verankerung und zur gleichzeitigen Abdichtung gegenüber der Tragfläche jeweils mit einem Kupplungssteg versehen sind, der sich quer zu einer durch die unteren Kanten des Grundkörpers verlanfenden Grundkörperebene erstreckt und an der gegenüberliegenden Seite des Grundkörpers eine in ihren Abmessungen auf diejenige des Kupplungssteges abgestimmte Kupplungsnut zur Aufnahme des Kupplungssteges des unmittelbar angrenzenden Grundkörpers gebildet ist.

Bekannte Anlagen dieser Art (DE-OS 39 34 485) werden ausschließlich auf den nach Süden abfallenden Dachbereich von sog. Nord-Süd-Dächern verlegt, bei denen die Kollektor- bzw. Absorber-Kanäle parallel zum Dachfirst verlaufen. Die Kollektorelemente sind dabei derart montiert, daß der die Kupplungsnut umfassende Rand des Grundkörpers höher verläuft als der nach unten abstehende Kupplungssteg desselben Grundkörpers. Die angestrebte Abdichtungswirkung wird bei dieser Anordnung und Festlegung der Kollektorelemente in befriedigender Weise sichergestellt.

Bei Anordnung und Montage dieser Kollektorelemente in um 90° gedrehter Lage auf sog. Ost-West-Dächern hat sich jedoch gezeigt, daß die Abdichtungswirkung des Kupplungssteges und der auf seine Abmessungen abgestimmten Kupplungsnut, in die er eingreift, zu wünschen übrig läßt. Es bedarf in diesem Fall somit zusätzlicher Abdichtungsmaßnahmen.

Der Erfindung liegt die Aufgabe zugrunde, eine Sonnenkollektoranlage der eingangs genannten Art zu schaffen, die es ermöglicht, ihre Kollektorelemente sowohl auf Nord-Süd-Dächern als auch auf Ost-West-Dächern (in um 90° gedrehter Position) anzuordnen, ohne befürchten zu müssen, daß sich Undichtigkeiten zeigen werden, und ohne daß es zu diesem Zweck besonderer Abdichtungsvorarbeiten bedarf.

Die Sonnenkollektoranlage nach der Erfindung, bei der diese Aufgabe gelöst ist, zeichnet sich dadurch aus, daß mindestens an der Grundkörperseite mit dem sich quer zur Grundkörperebene erstreckenden ersten Kupplungssteg ein zweiter, sich in gleicher Richtung erstreckender Kupplungssteg vorgesehen ist und daß diesem zweiten Kupplungssteg an der gegenüberliegenden Seite des Grundkörpers eine in ihren Abmessungen auf diejenige des zweiten Kupplungssteges abgestimmte zweite Kupplungsnut zugeordnet ist.

Eine Sonnenkollektoranlage aus derart ausgebildeten Kollektorelementen läßt sich sowohl auf Nord-Süd-Dächern als auch - in um 90° verschwenktem Zustand - auf Ost-West-Dächern montieren. Die Kollektorelemente stellen somit einen Einsatz auf beliebigen Dächern sicher. Außerdem ist gewährleistet, daß eine absolute Dichtheit gegeben ist. Es bedarf also keiner an den jeweiligen Einsatzzweck besonders angepaßter Kollektorelemente; somit ist eine besonders rationelle Fertigung der Kollektorelemente und damit auch der Sonnenkollektoranlagen unabhängig von der Dachform bzw. -ausrichtung, für die sie bestimmt sind, möglich.

Dabei hat es sich als sehr vorteilhaft erwiesen, wenn sowohl der erste als auch der zweite Kupplungssteg an der einen Seite des Grundkörpers sich nach unten erstreckend festgelegt sind und wenn die erste und auch die zweite Kupplungsnut an der gegenüberliegenden Seite des Grundkörpers sich nach oben öffnend ausgebildet sind.

Der erste Kupplungssteg und auch der zweite Kupplungssteg können von ein und derselben seitlich vorstehenden Körperkante des Grundkörpers ausgehen, d. h. sich praktisch in gleicher Ebene befinden. Eine demgegenüber im Hinblick auf die gewünschte Festigkeit der gegenseitigen Verankerung der Kollektorelemente günstigere Ausführung zeichnet sich dadurch aus, daß der erste und der zweite Kupplungssteg ebenso wie die zugehörigen ersten und zweiten Kupplungsnuten höhenversetzt zueinander angeordnet sind. Durch diesen Höhenversatz wird eine biegesteifere Kupplung benachbarter Kollektorelemente erzielt und gleichzeitig sichergestellt, daß die beiden Kupplungssteg-Kupplungsnuten-Verbindungen keine Überlastung erfahren. Außerdem ist der labyrinthartige Weg, den das Regenwasser überwinden müßte, um den Dichtbereich zu passieren, wesentlich verlängert.

Die Wirksamkeit der Abdichtung läßt sich in vorteilhafter Weise dadurch weiter erhöhen, daß mindestens einer der beiden Kupplungsstege im Bereich seiner stirnseitigen Stegkante mit einer Ausnehmung versehen ist, die beiderseits durch einen schmalen Stegkantenrand begrenzt ist.

Die Kollektorelemente weisen die doppelten Kupplungsstege und -nuten vorzugsweise an den Grundkörperseiten auf, die parallel zur Schnittlinie der Ebenen aufeinanderfolgender Kollektor- und Absorber-Kanäle verlaufen. Analoge Kupplungselemente können auch an den beiden sich quer zu diesen Seiten erstreckenden Grundkörperseiten vorgesehen sein, um mit ihrer Hilfe die Kollektorelemente auch in Querrichtung miteinander zu kuppeln und in bezug zueinander abzudichten. Eine praktischer zu verwirklichende Kupplungsabdichtung läßt sich dadurch erzielen, daß die doppelten Kupplungsstege bzw. -nuten nur an den beiden Grundkörper-Längsseiten vorgesehen sind, die parallel zur Schnittlinie der Ebenen aufeinanderfolgender Kollektor- und Absorber-Kanäle verlaufen, und daß an den beiden quer dazu verlaufenden Grundkörper-Querseiten jeweils eine sich zwischen einem unteren Seitenbereich des Grundkörpers zu einem oberen Seitenbereich quer erstreckende Wandabstufung vorgesehen ist, die zusammen mit der Wandabstufung des benachbarten Kollektorelements eine Fuge mit einer Breite entsprechend der doppelten Stufentiefe begrenzt, und daß in die Fuge ein den Spalt zwischen den unteren Seitenbereichen der benachbarten Grundkörper abdeckender, sich über die Fugenbreite erstreckender, aus elastischem Material, vorzugsweise Silikonkautschuk, bestehender Abdichtungsstreifen eingesetzt ist.

Die angestrebte Abdichtung im Bereich der Grundkörper-Querseiten wird auf besonders einfache und rationelle Weise dadurch gefördert, daß der Abdichtungsstreifen eine Länge besitzt, die der Länge der durch die einzelnen aufeinanderfolgenden Fugen gebildeten Gesamtfuge entspricht.

Eine besondere Erwähnung verdient die Tatsache, daß in weiterer zweckmäßiger Ausgestaltung der Erfindung in den unteren Seitenbereichen jedes Grundkörpers jeweils mindestens eine durchgehende Einbuchtung eingeformt ist, die zusammen mit der entsprechenden Einbuchtung am angrenzenden Grundkörper eine durchgehende Öffnung begrenzt, durch die vorzugsweise durch einen Schraubbolzen gebildete Befestigungsmittel für die Fixierung der Kollektorelemente auf der Tragfläche hindurchführbar sind, und daß der die beiden Randprofile des Abdichtungsstreifens verbindende mittlere Streifenbereich so breit bemessen ist, daß er sich in in die Fuge eingesetztem Zustand des Abdichtungsstreifens über den aus der durchgehenden Öffnung vorstehenden oberen Teil des Befestigungsmittels hinweg erstreckt.

Als ganz besonders vorteilhaft hat es sich bei Verwendung von Abdichtungsstreifen dieser Art herausgestellt, wenn bei Anordnung der Kollektorelemente auf den beiden geneigten Flächen eines Ost-West-Daches bis zur Höhe des Dachfirstes ein Abdichtungsstreifen mit einer Breite des sich zwischen den Randprofilen erstreckenden mittleren Streifenbereichs eingesetzt ist, der sicherstellt, daß sich der mittlere Streifenbereich über den Dachfirst hinweg erstreckt.

In fertigungstechnischer Hinsicht sowie im Hinblick auf die Montage ist es sehr günstig, wenn sich die Wandabstufungen mit den Ausnehmungen in einer Ebene erstrecken, die oberhalb der Ebene des ersten Kupplungssteges bzw. der diesen aufnehmenden ersten Kupplungsnut, jedoch unterhalb der Ebene des zweiten Kupplungssteges bzw. der diesen aufnehmenden zweiten Kupplungsnut, liegt.

Weitere Einzelheiten und Vorteile der Erfindung ergeben sich aus der folgenden Beschreibung anhand der beigefügten Zeichnung, auf die bezüglich aller in der Beschreibung nicht erwähnter wesentlicher Merkmale ausdrücklich verwiesen wird. Es zeigen:
- Fig. 1: eine perspektivische Ansicht der Anordnung der Sonnenkollektoranlage auf einem Süd-Dach bzw. einem Ost-West-Dach,
- Fig. 2: einen Schnitt entsprechend der Linie II-II der Fig. 1, und
- Fig. 3: einen Schnitt entsprechend der Linie III-III der Fig. 1.

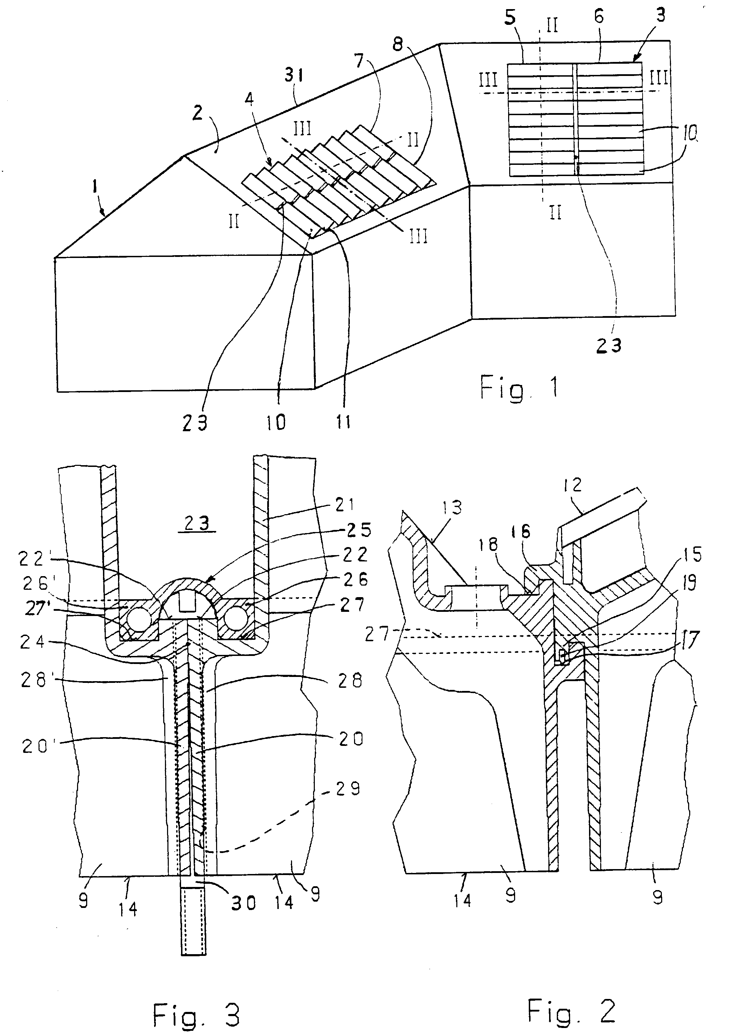

Das Dach 1 des in Fig. 1 schematisch dargestellten Hauses dient mit seiner eine Neigung von etwa 25° aufweisenden Fläche als Tragfläche 2 für nur schematisch veranschaulichte Sonnenkollektoranlagen 3 bzw. 4. Die Sonnenkollektoranlage 3 ist auf der Tragfläche 2 des Süd-Dachs des Haus teils mit einer Ost-West-Firstausrichtung angeordnet, die Anlage 4 auf beiden Tragflächen des Ost-West-Daches des Haus teils mit einer Nord-Süd-Firstausrichtung; dargestellt ist in dieser perspektivischen Ansicht nur die Anlage 4 auf der sichtbaren rechten Dachseite.

Wie schematisch veranschaulicht, umfaßt jede Sonnenkollektoranlage eine Mehrzahl von Kollektorelementen 5, 6, 7 und 8. Jedes dieser Elemente weist einen Grundkörper 9 mit mehreren in einer der Sonne zugewandten Ebene liegenden, an ein Wärmeträgerfluidnetz anschließbaren Kollektorkanälen sowie entsprechend vielen in einer quer zum Kollektorkanal 10 ausgerichteten Ebene liegenden Absorberkanälen 11 auf, die in bekannter Weise ausgebildet und mit dem Grundkörper 9 zu einer Einheit verbunden sind. In den Fig. 2 und 3 ist die Hauptebene des Grundkörpers, d.h. die einen rechten Winkel mit der Zeichenebene einschließende und durch die unteren Kanten des Grundkörpers verlaufende Grundkörperebene bei 14 angedeutet. Die Ebenen der Außenflächen der Kollektorkanäle 10 bzw. der Absorberkanäle 11 sind in Fig. 2 schematisch mit 12 und 13 bezeichnet. Die Neigung der Ebenen 12 der Kollektorkanäle 10 in bezug zur Grundkörperebene 14 liegt bei 26°, so daß sich eine Gesamtneigung von 51° ergibt. Diese Gesamtneigung ist in unseren europäischen Breitengraden sehr günstig, da sich gerade im Winter bei einer Sonnenneigung von ca. 18° optimale Einstrahlungsbedingungen ergeben. Bei höherem Sonnenstand im Sommer werden dennoch befriedigende Ergebnisse erzielt.

In der Praxis umfaßt jeder Grundkörper 9 drei aufeinanderfolgende Kollektorkanal-Absorber-Einheiten. Abweichend von der schematischen Darstellung in Fig. 1 weist in der Praxis jede Kollektorelementreihe 5, 6, 7 und 8 jeweils drei Grundkörper 9 mit jeweils drei Einheiten auf, so daß im veranschaulichten Beispiel in den Reihen 5 bis 8 jeweils 3 x 3, also neun, Einheiten vorhanden sind. Die zwischen zwei aufeinanderfolgenden Grundkörpern herrschenden Verhältnisse sind schematisch in den Fig. 2 und 3 veranschaulicht.

Die im Bereich von zwei sich parallel zueinander erstreckenden Seiten ihrer vier Grundkörperseiten sind zur gegenseitigen festen Verankerung und zur gleichzeitigen Abdichtung gegenüber der Tragfläche 2 jeweils mit einem sich quer zur Grundkörperebene 14 erstreckenden ersten Kupplungssteg 15 und einem zweiten, sich in gleicher Richtung erstreckenden Kupplungssteg 16 versehen. An der gegenüberliegenden Seite des Grundkörpers 9 ist eine in ihren Abmessungen auf diejenige des Kupplungssteges 15 abgestimmte Kupplungsnut 17 zur Aufnahme des ersten Kupplungssteges 15 des unmittelbar angrenzenden Grundkörpers 9 gebildet. In analoger Weise ist auch dem zweiten Kupplungssteg 16 eine auf dessen Abmessungen abgestimmte zweite Kupplungsnut 18 zugeordnet. Sowohl der erste als auch der zweite Kupplungssteg 15, 16 sind an der einen Seite des Grundkörpers 9 sich nach unten erstreckend festgelegt. Die erste und auch die zweite Kupplungsnut 17, 18 sind an der gegenüberliegenden Seite des Grundkörpers 9 sich nach oben öffnend ausgebildet. Der erste und der zweite Kupplungssteg 15, 16 sind ebenso wie die zugehörigen ersten und zweiten Kupplungsnuten 17, 18 höhenversetzt zueinander angeordnet. Mindestens einer der beiden Kupplungsstege 15 ist im Bereich seiner stirnseitigen Stegkante mit einer Ausnehmung 19 versehen, die beiderseits durch einen schmalen Stegkantenrand begrenzt ist.

Wie aus den Fig. 2 und 3 hervorgeht, sind die doppelten Kupplungsstege 15, 16 bzw. Kupplungsnuten 17, 18 nur an den beiden Grundkörper-Längsseiten vorgesehen, die parallel zur Schnittlinie der Ebenen 12, 13 aufeinanderfolgender Kollektor- und Absorberkanäle verlaufen. An den beiden quer dazu verlaufenden Grundkörper-Querseiten ist jeweils eine sich zwischen einem unteren Seitenbereich 20 des Grundkörpers 9 zu einem oberen Seitenbereich 21 quer erstreckende Wandabstufung 22 vorgesehen. Diese Wandabstufung 22 begrenzt zusammen mit der Wandabstufung 22' des benachbarten Kollektorelements eine Fuge 23 mit einer Breite entsprechend der doppelten Stufentiefe. In diese Fuge 23 ist ein den Spalt 24 zwischen den unteren Seitenbereichen 20, 20' der benachbarten Grundkörper abdeckender Abdichtungsstreifen 25 eingesetzt. Dieser Abdichtungsstreifen 25 besteht aus elastischem Material, vorzugsweise Silikonkautschuk. Der Abdichtungsstreifen 25 besitzt eine Länge, die der Länge der durch die einzelnen aufeinanderfolgenden Fugen 23 gebildeten Gesamtfuge der Sonnenkollektoranlage entspricht. Im Bereich seiner Längsränder läuft der Abdichtungsstreifen 25 jeweils in ein Randprofil 26, 26' mit größerem Querschnitt aus. Dieser ist an den Querschnitt einer der Randprofilaufnahme dienenden Ausnehmung 27, 27' in der Wandabstufung 22, 22' angepaßt. Aus Fig. 3 ist ersichtlich, daß die Randprofile 26, 26' des Abdichtungsstreifens 25 hohl ausgebildet sind. Ferner ergibt sich aus dieser Figur, daß bei der gezeigten Ausführungsform die Randprofile 26, 26' einen rechteckigen Querschnitt mit einer Breite besitzen, die der Breite der zugehörigen Ausnehmung 27, 27' in der Wandabstufung 22, 22' entspricht.

In den unteren Seitenbereichen jedes Grundkörpers 9 ist jeweils mindestens eine durchgehende Einbuchtung 28 ausgeformt, die zusammen mit der entsprechenden Einbuchtung 28' am angrenzenden Grundkörper eine durchgehende Öffnung 29 begrenzt. Durch diese Öffnung ist ein Schraubbolzen 30 oder ein anderes Befestigungsmittel für die Fixierung der Kollektorelemente auf der Tragfläche hindurchführbar. Der die beiden Randprofile 26, 26' des Abdichtungsstreifens 25 verbindende mittlere Streifenbereich ist so breit bemessen, daß er sich in in die Fuge 23 eingesetztem Zustand des Abdichtungsstreifens 25 über den aus der durchgehenden Öffnung 29 vorstehenden oberen Teil des Schraubbolzens 30 hinweg erstreckt.

Der Fig. 3 ist der Regelfall entnehmbar, daß die einander zugewandten unteren Seitenbereiche 20, 20' der Grundkörper 9 dicht aneinandergefügt sind und einander berühren. Bei Anordnung der Kollektorelemente auf den beiden geneigten Flächen eines Ost-West-Daches bis zur Höhe des Dachfirstes 31 ist eine derartige Berührung der Grundkörper 9 der Kollektorelemente natürlich nicht möglich. Dennoch ist eine Abdichtung des Firstbereiches auf einfache und sichere Weise möglich, indem ein Abdichtungsstreifen mit einer Breite des sich zwischen den Randprofilen erstreckenden mittleren Streifenbereichs eingesetzt ist, der sicherstellt, daß sich der mittlere Streifenbereich über den Dachfirst 31 hinweg erstreckt.

Die Abmessungsverhältnisse, die aus den Fig. 2 und 3 ersichtlich sind, veranschaulichen, daß sich die Wandabstufungen 22, 22' mit den Ausnehmungen 27, 27' in einer Ebene erstrecken, die oberhalb der Ebene des ersten Kupplungssteges 15 bzw. der diesen aufnehmenden ersten Kupplungsnut 17, jedoch unterhalb der Ebene des zweiten Kupplungssteges 16 bzw. der diesen aufnehmenden zweiten Kupplungsnut 18 liegt.

## Patentansprüche

1. Sonnenkollekoranlage aus einer Mehrzahl von auf einer vorzugsweise geneigten Tragfläche (2), z.B. einem Dach, festlegbaren Kollektorelementen (5, 6, 7, 8), die jeweils einen Grundkörper (9) mit einem oder mehreren in einer der Sonne zugewandten Ebene (12) liegenden, an ein Wärmeträgerfluidnetz anschließbaren Kollektorkanälen, sowie ggf. einem oder mehreren in einer quer zur Kollektorkanalebene ausgerichteten Ebene (13) liegenden Absorberkanälen umfassen, wobei die Grundkörper (9) der Kollektorelemente (5, 6, 7,8) mindestens im Bereich von zwei sich parallel zueinander erstreckenden Seiten ihrer vier Seiten zur gegenseitigen festen Verankerung und zur gleichzeitigen Abdichtung gegenüber der Tragfläche jeweils mit einem Kupplungssteg (15) versehen sind, der sich quer zu einer durch die unteren kanten des Grundkörpers (9) verlanfenden Grundkörperebene (14) erstreckt, und an der gegenüberliegenden Seite des Grundkörpers (9) eine in ihren Abmessungen auf diejenige des Kupplungssteges (15) abgestimmte Kupplungsnut (17) zur Aufnahme des Kupplungssteges des unmittelbar angrenzenden Grundkörpers (9) gebildet ist, dadurch gekennzeichnet, daß mindestens an der Grundkörperseite mit dem sich quer zur Grundkörperebene (14) erstreckenden ersten Kupplungssteg (15) ein zweiter, sich in gleicher Richtung erstreckender Kupplungssteg (16) vorgesehen ist, und daß diesem zweiten Kupplungssteg an der gegenüberliegenden Seite des Grundkörpers (9) eine in ihren Abmessungen auf diejenige des zweiten Kupplungssteges (16) abgestimmte zweite Kupplungsnut (18) zugeordnet ist.

2. Sonnenkollektoranlage nach Anspruch 1, dadurch gekennzeichnet, daß sowohl der erste als auch der zweite Kupplungssteg (15, 16) an der einen Seite des Grundkörpers (9) sich nach unten erstreckend festgelegt sind und daß die erste und auch die zweite Kupplungsnut (17, 18) an der gegenüberliegenden Seite des Grundkörpers (9) sich nach oben öffnend ausgebildet sind.

3. Sonnenkollektoranlage nach Anspruch 1 oder 2, **dadurch gekennzeichnet,** daß der erste und der zweite Kupplungssteg (15, 16) ebenso wie die zugehörigen ersten und zweiten Kupplungsnuten (17, 18) höhenversetzt zueinander angeordnet sind.

4. Sonnenkollektoranlage nach einem der Ansprüche 1 bis 3, **dadurch gekennzeichnet,** daß mindestens einer der beiden Kupplungsstege (15) im Bereich seiner stirnseitigen Stegkante mit einer Ausnehmung (19) versehen ist, die beiderseits durch einen schmalen Stegkantenrand begrenzt ist.

5. Sonnenkollektocanlage nach einem der Ansprüche 1 bis 4, **dadurch gekennzeichnet,** daß die doppelten Kupplungsstege bzw. -nuten nur an den beiden Grundkörper-Längsseiten vorgesehen sind, die parallel zur Schnittlinie der Ebenen (12, 13) aufeinanderfolgender Kollektor- und Absorber-Kanäle verlaufen, und daß an den beiden quer dazu verlaufenden Grundkörper-Querseiten jeweils eine sich zwischen einem unteren Seitenbereich (20) des Grundkörpers (9) zu einem oberen Seitenbereich quer erstreckende Wandabstufung (22) vorgesehen ist, die zusammen mit der Wandabstufung (22') des benachbarten Kollektorelements eine Fuge (23) mit einer Breite entsprechend der doppelten Stufentiefe begrenzt, und daß in die Fuge ein den Spalt (24) zwischen den unteren Seitenbereichen (20, 20') der benachbarten Grundkörper abdeckender, sich über die Fugenbreite erstreckender, aus elastischem Material, vorzugsweise Silikonkautschuk, bestehender Abdichtungsstreifen (25) eingesetzt ist.

6. Sonnenkollektoranlage nach Anspruch 5, **dadurch gekennzeichnet,** daß der Abdichtungsstreifen eine Länge besitzt, die der Länge der durch die einzelnen aufeinanderfolgenden Fugen (23) gebildeten Gesamtfuge entspricht.

7. Sonnenkollektoranlage nach den Ansprüchen 5 oder 6, dadurch gekennzeichnet, daß der Abdichtungsstreifen (25) im Bereich seiner Längsränder jeweils in ein Randprofil (26, 26') mit größerem Querschnitt ausläuft, der an den Querschnitt einer der Randprofilaufnahme dienenden Ausnehmung (27, 27') in der Wandabstufung (22, 22') angepaßt ist.

8. Sonnenkollektoranlage nach Anspruch 7, dadurch gekennzeichnet, daß die Randprofile (26, 26') des Abdichtungsstreifens (25) hohl ausgebildet sind.

9. Sonnenkollektoranlage nach einem der Ansprüche 7 und 8, dadurch gekennzeichnet, daß die Randprofile (26, 26') einen rechteckigen Querschnitt mit einer Breite besitzen, die der Breite der zugehörigen Ausnehmung (27, 27') in der Wandabstufung (22, 22') entspricht.

10. Sonnemkollektoranlage nach einem der Ansprüche 7 bis 9, dadurch gekennzeichnet, daß in den unteren Seitenbereichen jedes Grundkörpers (9) jeweils mindestens eine durchgehende Einbuchtung (28) ausgeformt ist, die zusammen mit der entsprechenden Einbuchtung (28') am angrenzenden Grundkörper eine durchgehende Öffnung (29) begrenzt, durch die vorzugsweise durch einen Schraubbolzen (30) gebildete Befestigungsmittel für die Fixierung der Kollektorelemente auf der Tragfläche hindurchführbar sind, und daß der die beiden Randprofile (26, 26') des Abdichtungsstreifens (25) verbindende mittlere Streifenbereich so breit bemessen ist, daß er sich in in die Fuge (23) eingesetztem Zustand des Abdichtungsstreifens (25) über den aus der durchgehenden Öffnung (29) vorstehenden oberen Teil des Befestigungsmittels hinweg erstreckt.

11. Sonnenkollektoranlage nach den Ansprüchen 5 und 10, dadurch gekennzeichnet, daß bei Anordnung der Kollektorelemente auf den beiden geneigten Flächen eines Ost-West-Daches bis zur Höhe des Dachfirstes (31) ein Abdichtungsstreifen mit einer Breite des sich zwischen den Randprofilen erstreckenden mittleren Streifenbereichs eingesetzt ist, der sicherstellt, daß sich der mittlere Streifenbereich über den Dachfirst hinweg erstreckt.

12. Sonnenkollektoranlage nach einem der Ansprüche 5 bis 10, **dadurch gekennzeichnet,** daß sich die Wandabstufungen (22, 22') mit den Ausnehmungen (27, 27') in einer Ebene erstrecken, die oberhalb der Ebene des ersten Kupplungssteges (15) bzw, der diesen aufnehmenden ersten Kupplungsnut (17), jedoch unterhalb der Ebene des zweiten Kupplungssteges (16) bzw. der diesen aufnehmenden zweiten Kupplungsnut (18) liegt.

## Claims

1. A solar collector installation comprising a plurality of collector elements (5, 6, 7, 8) which can be fixed to a supporting surface (2), preferably a sloping supporting surface e.g. a roof, each of which comprises a base body (9) having one or more collector ducts which lie in a plane (12) facing the sun and which can be connected to a heat transfer fluid network, and optionally comprises one or more absorber ducts aligned in a plane (13) transverse to the collector duct plane, wherein the base bodies (9) of the collector elements (5, 6, 7, 8) are provided, at least in the region of two sides, which extend parallel to each other, of their four sides, with a coupling tongue (15) in each case for mutual, fixed anchorage and for sealing at the same time, which coupling tongue extends transverse to a base body plane (14) passing through the lower edges of the base body (9), and a coupling groove (17), the dimensions of which are matched to those of the coupling tongue (15), is formed on the opposite side of the base body (9) for receiving the coupling tongue of the directly adjacent base body (9), characterised in that a second coupling tongue (16) extending in the same direction is provided at least on the side of the base body having the first coupling tongue (15) which extends transverse to the plane (14) of the base body, and that on the opposite side of the base body (9) a second coupling groove (18), the dimensions of which are matched to those of the second coupling tongue (16), is associated with this second coupling tongue.

2. A solar collector installation according to claim 1, characterised in that both the first and the second coupling tongues (15, 16) are fixed extending downwards on one side of the base body (9), and that the first and also the second coupling groove (17, 18) are constructed opening upwards on the opposite side of the base body (9).

3. A solar collector installation according to claim I or 2, characterised in that the first and the second coupling tongues (15, 16) are disposed offset in height in relation to each other, as are the associated first and second coupling grooves (17, 18).

4. A solar collector installation according to any one of claims 1 to 3, characterised in that at least one of the two coupling tongues (15) is provided with a recess (19) in the region of its end face tongue edge, which recess is delimited on both sides by a narrow tongue edge border.

5. A solar collector installation according to any one of claims 1 to 4, characterised in that the double coupling tongues and grooves, respectively, are only provided on the two longitudinal sides of the base body which run parallel to the line of intersection of the planes (12, 13) of successive collector and absorber ducts, and that a stepped wall portion (22), which extends transversely between a lower side region (20) of the base body (9) to an upper side region, is provided on each of the two transverse sides of the base body running transverse to the said longitudinal sides, which stepped wall portion, together with the stepped wall portion (22') of the adjacent collector element, delimits a joint (23) with a width corresponding to twice the step height, and that a sealing strip (25) consisting of elastic material, preferably silicone rubber, which covers the gap (24) between the lower side regions (20, 20') of the adjacent base bodies and which extends over the width of the joint, is inserted in the joint.

6. A solar collector installation according to claim 5, characterised in that the sealing strip has a length which corresponds to the length of the overall joint formed by the successive individual joints (23).

7. A solar collector installation according to claims 5 or 6, characterised in that the sealing strip (25) runs out into an edge section (26, 26') of larger cross-section in the region of each of its longitudinal edges, which cross-section is matched to the cross-section of a recess (27, 27') in the stepped wall portion (22, 22') which serves to receive the edge section.

8. A solar collector installation according to claim 7, characterised in that the edge sections (26, 26') of the sealing strip (25) are of hollow construction.

9. A solar collector installation according to either one of claims 7 and 8, characterised in that the edge sections (26, 26') have a rectangular cross-section with a width which corresponds to the width of the associated recess (27, 27') in the stepped wall portion (22, 22').

10. A solar collector installation according to any one of claims 7 to 9, characterised in that at least one continuous indentation (28) is formed in each of the lower side regions of each base body (9), which indentation, together with the corresponding indentation (28') in the adjacent base body, delimits a continuous opening (29) through which fixing means, which are preferably formed by a threaded stud (30), can be passed for fixing the collector elements to the supporting surface, and that the width of the central strip region joining the two edge sections (26, 26') of the sealing strip (25) is dimensioned so that when the sealing strip (25) is inserted in the joint (23) the central strip region extends over the upper part of the fixing means which protrudes from the continuous opening (29).

11. A solar collector installation according to claims 5 and 10, characterised in that when the collector elements are disposed on the two sloping faces of an east-west roof up to the height of the roof ridge (31), a sealing strip is used which has the width of the central strip region which extends between the edge sections, and which ensures that the central strip region extends over the roof ridge.

12. A solar collector installation according to any one of claims 5 to 10, characterised in that the stepped wall portions (22, 22') with the recesses (27, 27') extend in a plane which lies above the plane of the first coupling tongue (15) and of the first coupling groove (17) which receives the latter, respectively, but lies below the plane of the second coupling tongue (16) and of the second coupling grove (18) which receives the latter, respectively.

## Revendications

1. Installation formant collecteur solaire constituée d'une pluralité d'éléments collecteurs (5, 6, 7, 8) pouvant être fixés sur une surface porteuse de préférence inclinée (2), par exemple un toit, qui comportent respectivement un corps de base (9) présentant un ou plusieurs canaux collecteurs se trouvant dans un plan (12) orienté vers le soleil, pouvant être raccordés à un réseau de fluide caloporteur, et le cas échéant un ou plusieurs canaux d'absorption se trouvant dans un plan (13) orienté transversalement au plan de canal collecteur, les corps de base (9) des éléments collecteurs (5, 6, 7, 8) étant pourvus au moins au voisinage de deux côtés s'étendant parallèlement l'un à l'autre de leur quatre côtés, en vue de l'ancrage mutuel fixe et de l'étanchéification simultanée par rapport à la surface porteuse, respectivement d'une barrette d'accouplement (15) qui s'étend transversalement à un plan de corps de base (14) passant à travers les arêtes inférieures du corps de base (9), et au côté opposé du corps de base (9) il est formé une rainure d'accouplement (17) dont les dimensions sont accordées à celles de la barrette d'accouplement (15) pour la réception de la barrette d'accouplement du corps de base (9) directement avoisinant, caractérisée en ce qu'il est prévu au moins au côté du corps de base présentant la première barrette d'accouplement (15) s'étendant transversalement au plan de corps de base (14) une deuxième barrette d'accouplement (16) s'étendant dans la même direction, et en ce qu'il est associé à cette deuxième barrette d'accouplement au côté opposé du corps de base (9) une deuxième rainure d'accouplement (18) dont les dimensions sont accordées à celles de la deuxième barrette d'accouplement (16).

2. Installation formant collecteur solaire selon la revendication 1, caractérisée en ce que la première ainsi que la deuxième barrette d'accouplement (15, 16) sont fixées à un côté du corps de base (9) en s'étendant vers le bas, et en ce que la première et aussi la deuxième rainure d'accouplement (17, 18) sont réalisées au côté opposé du corps de base (9) en s'ouvrant vers le haut.

3. Installation formant collecteur solaire selon la revendication 1 ou 2, caractérisée en ce que les première et deuxième barrettes d'accouplement (15, 16) ainsi que les première et deuxième rainures d'accouplement (17, 18) correspondantes sont disposées de façon décalée en hauteur les unes par rapport aux autres.

4. Installation formant collecteur solaire selon l'une des revendications 1 à 3, caractérisée en ce qu'au moins l'une des deux barrettes d'accouplement (15) est pourvue au voisinage de son arête de barrette côté frontal d'un évidement (19) qui est délimité des deux côtés par un bord d'arête de barrette étroit.

5. Installation formant collecteur solaire selon l'une des revendications 1 à 4, caractérisée en ce que les barrettes et, respectivement rainures d'accouplement doubles sont prévues seulement aux deux côtés longitudinaux du corps de base qui s'étendent parallèlement à la ligne de coupe des plans (12, 13) de canaux collecteurs et d'absorption successifs et en ce qu'il est prévu aux deux côtés transversaux du corps de base s'étendant transversalement à ceux-ci respectivement un gradin de paroi (22) s'étendant entre une zone latérale inférieure (20) du corps de base (9) transversalement à une zone latérale supérieure, qui délimite conjointement avec le gradin de paroi (22') de l'élément collecteur avoisinant une jointure (23) d'une largeur correspondant à la profondeur de gradin double, et en ce qu'il est placé dans la jointure une bande d'étanchéité (25) recouvrant la fente (24) entre les zones latérales inférieures (20, 20') des corps de base avoisinants, s'étendant sur la largeur de la jointure et réalisée en un matériau élastique, de préférence en caoutchouc silicone.

6. Installation formant collecteur solaire selon la revendication 5, caractérisée en ce que la bande d'étanchéité a une longueur qui correspond à la longueur de la jointure totale formée par les différentes jointures successives (23).

7. Installation formant collecteur solaire selon les revendications 5 ou 6, caractérisée en ce que la bande d'étanchéité (25) se termine au voisinage de ses bords longitudinaux respectivement par un profilé de bord (26, 26') d'une section transversale plus grande qui est adaptée à la section transversale d'un évidement (27, 27') servant à recevoir le profilé de bord dans le gradin de paroi (20, 22').

8. Installation formant collecteur solaire selon la revendication 7, caractérisée en ce que les profilés de bord (26, 26') de la bande d'étanchéité (25) sont creux.

9. Installation formant collecteur solaire selon l'une des revendications 7 et 8, caractérisée en ce que les profilés de bord (26, 26') ont une section transversale rectangulaire d'une largeur qui correspond à la largeur de l'évidement associé (27, 27') dans le gradin de paroi (22, 22').

10. Installation formant collecteur solaire selon l'une des revendications 7 à 9, caractérisée en ce qu'il est formé dans les zones latérales inférieures de chaque corps de base (9) respectivement au moins un creux continu (28) qui délimite conjointement avec le creux correspondant (28') au corps de base avoisinant une ouverture continue (29) à travers laquelle on peut faire passer des moyens de fixation constitués de préférence d'un boulon fileté (30) pour fixer les éléments collecteurs sur la surface porteuse, et en ce que la zone de bande centrale reliant les deux profilés de bord (26, 26') de la bande d'étanchéité (25) a une largeur telle qu'elle s'étend, lorsque la bande d'étanchéité (25) est placée dans la jointure (23), au-delà de la partie supérieure faisant saillie de l'ouverture continue (29) du moyen de fixation.

11. Installation formant collecteur solaire selon les revendications 5 et 10, caractérisée en ce que lors de la disposition des éléments collecteurs sur les deux surfaces inclinées d'un toit est-ouest, jusqu'à la hauteur du faîte (31), une bande d'étanchéité est mise en place avec une largeur de la zone de bande centrale s'étendant entre les profilés de bord et qui assure que la zone de bord centrale s'étend au-delà du faîte.

12. Installation formant collecteur solaire selon l'une des revendications 5 à 10, caractérisée en ce que les gradins de paroi (22, 22') avec les évidements (27, 27') s'étendent dans un plan qui se situe au-dessus du plan de la première barrette d'accouplement (15) et, respectivement la première rainure d'accouplement (17) recevant celle-ci, cependant en dessous du plan de la deuxième barrette d'accouplement (16) et, respectivement la deuxième rainure d'accouplement (18) recevant celle-ci.
